# FASCICULE DE BREVET EUROPEEN

(11) **EP 0 893 064 B1**
(45) Date de publication et mention de la délivrance du brevet: **15.01.2003**
(21) Numéro de dépôt: 97202289.1
(22) Date de dépôt: 22.07.1997
(51) Int. Cl.: A23D 9/00, C11C 3/10, C11C 3/08, A23C 11/04, A23L 1/30

(54) **Composition lipidique pour formule infantile et procédé de préparation**
Lipidzusammensetzung für Säuglingsnährpräparat und Herstellungsverfahren
Lipid composition for infant formula and process for making same

(43) Date de publication de la demande: 27.01.1999
(73) Titulaire: SOCIETE DES PRODUITS NESTLE S.A., 1800 Vevey (CH)
(72) Inventeur: Wang, Junkuan, 1010 Lausanne (CH); Bertholet, Raymond, 1807 Blonay (CH); Ducret, Pierre, 1113 ST. Saphorin/Morges (CH); Fleith, Mathilde, 1814 LA Tour-de-Peilz (CH)
(74) Mandataire: Archambault, Jean

(56) Documents cités:
- EP-A- 0 265 699
- EP-A- 0 496 456
- WO-A-90/04013
- WO-A-95/31110

## Description

L'invention se rapporte au domaine des lipides diététiques, en particulier pour formules infantiles. Elle a trait à une composition lipidique proche de celle de lait humain.

La matière grasse de lait humain est composée essentiellement de triacylglycérols (TAGs) dont la structure, la composition et la distribution des acides gras sont spécifiques. Elle se caractérise en particulier par la présence de deux acides gras polyinsaturés à longue chaîne (LC-PUFA), l'acide arachidonique (AA, C20:4, n-6) et l'acide docosahexaénoique (DHA, C22:6, n-3) en prédominance en position 2 du triacylglycérol, par l'abondance de l'acide saturé (SFA) palmitique (P, C16:0) ainsi que par le fait que le P est en prédominance en position 2 du triacylglycérol.

Des compositions lipidiques pour formules infantiles proches de la matière grasse de lait humain ainsi que des procédés de préparation de telles compositions sont décrits dans le brevet EP-B-209327 et dans les demandes de brevet WO 94/26855 (PCT/EP94/01306) et WO 94/26854 (PCT/EP94/01304). Ces compositions comprennent un mélange de TAGs dans lequel plus de 50 % des acides gras en position 2 du triacylglycérol sont des SFA, en prédominance P, et où les acides gras en positions 1,3 du triacylglycérol comprennent les acides gras insaturés et des acides gras saturés à chaîne moyenne en C₈-C₁₄ (MCFA).

Le procédé de préparation de ces compositions décrit dans EP-B-209327 consiste en une interestérification catalysée par une lipase 1,3 régiospécifique d'un mélange constitué d'une part d'une fraction d'huile de palme comprenant 80 % de tristéarine et 20 % de 1,3-dipalmitoyl-2-oléine et d'autre part d'un mélange d'acides gras libres contenant une quantité substantielle d'acides gras insaturés. Sous l'action de la lipase 1,3 régiospécifique, des résidus d'acide gras insaturés et/ou saturés à chaîne moyenne sont introduits aux positions 1,3 des 2-palmitoyl-glycérides. Les acides gras libres du mélange brut sont ensuite éliminés par entraînement à la vapeur. Le mélange de TAGs synthétique produit est finalement mélangé à différentes huiles végétales.

Dans WO 94/26855, le mélange de TAGs synthétique précédent, mélangé à différentes huiles végétales dans des proportions définies est soumis à une interestérification au moyen d'une lipase 1,3 régiospécifique.

Dans WO 94/26854, le cas échéant après élimination des diglydérides par traitement enzymatique, les TAGs trisaturés sont en partie éliminés du mélange de TAGs synthétique précédent par interestérification au moyen d'une lipase 1,3 régiospécifique en présence d'une huile riche en acide mono- ou di-insaturés.

Les procédés connus présentent des inconvénients.
- Dans la mesure où la plupart des lipases usuelles ont une faible réactivité vis-à-vis des acides gras polyinsaturés (PUFAs), particulièrement vis-à-vis des LC-PUFAs, il est très difficile d'incorporer les quantités désirées de ces acides gras, en particulier de DHA dans les TAGs au moyen d'une lipase 1,3 régiospécifique. Ainsi, pour atteindre un degré appréciable d'incorporation, il faut utiliser un fort excès d'acide gras, par exemple sous forme concentrée, et une longue durée de réaction. Les concentrés de PUFAs sont très chers. La longue durée de réaction peut engendrer une oxydation significative des PUFAs qui sont particulièrement sensibles à l'oxydation lorsqu'ils sont sous forme d'acides gras libres. Une telle oxydation diminue la valeur nutritionelle des PUFAs et peut produire des composés de dégradation nuisibles à la santé.
- De plus, l'utilisation de lipase 1,3 régiospécifique produit des TAGs trisaturés en excès et également des diglycérides. Il faut des traitements enzymatiques ultérieurs, en particulier pour éliminer les TAGs trisaturés en excès du produit brut, ce qui complique et renchérit le procédé.
- Enfin, le mélange lipidique obtenu doit malgré tout être coupé avec d'autres graisses pour correspondre à la composition de la graisse de lait humain.

Le but de l'invention est de fournir une composition de TAGs synthétique dont la composition et la structure sont proches de celles de lait humain au moyen d'un procédé simplifié d'incorporation de PUFAs n'entrainant pas de dégradation oxydative significative des dits PUFAs.

L'invention concerne donc une composition lipidique synthétique dont le contenu et la distribution des acides gras sont proches de ceux de la graisse de lait humain, caractérisée par le fait:
- qu'elle contient moins de 2 % en poids d'acides gras libres,
- que les acides gras des triacylglycérols, comprennent en poids:
   - 35 à 55 % d'acides gras saturés, parmi lesquels 18 à 36 % d'acide palmitique, 2 à 40 % d'acides caprylique et caprique, au plus 10 % d'acide laurique et au plus 10 % d'acide myristique,
   - 30 à 45 % d'acides gras monoinsaturés,
   - 9 à 22 % d'acides gras polyinsaturés, parmi lesquels moins de 2 % d'acides gras polyinsaturés à longue chaîne n-6 comprenant l'acide arachidonique et moins de 1% d'acides gras polyinsaturés à longue chaîne n-3 comprenant l'acide docosahexaénoique et que le rapport des acides gras n-6:n-3 est 5:1 à 15:1,
- que l'acide palmitique est en prédominance en position 2 des triacylglycérols et que les acides arachidonique et docosahexaénoique sont répartis entre les positions 1, 2 et 3 des triacylglycérols.

Les acides AA et DHA peuvent être en prépondérance en position 2 des triacylglycérols.

Dans la mesure où elle est plus spécifiquement destinée à l'alimentation des prématurés, la composition lipidique selon l'invention est telle que les acides caprylique et caprique représentent de préférence 2 à 10 % en poids des acides gras des triacylglycérols.

L'invention concerne également un procédé de préparation d'une composition lipidique précédente, caractérisé par les étapes successives suivantes:
1) On interestérifie de manière non-régiospécifique un mélange de lipides contenant une huile de palme enrichie en acide palmitique, une huile végétale riche en les acides gras insaturés linoléique et alpha-linolénique, une huile source d'acide arachidonique, une huile source d'acide docosahexaénoique, dans des proportions définies pour obtenir la composition en acides gras requise avec une distribution aléatoire des résidus d'acides gras entre les positions 1, 2 et 3 du triacylglycérol,
2) On interestérifie le mélange de l'étape 1) avec un mélange d'acides gras libres comprenant en prédominance les acides gras à chaîne moyenne et l'acide oléique, au moyen d'une lipase 1,3 régiospécifique et
3) On élimine les acides gras libres du produit de la réaction de l'étape 2).

Le but de l'étape 1) est d'augmenter la quantité de P en position 2 des TAGs et d'incorporer les PUFAs, en particulier les LC-PUFAs tels que le DHA et l'AA aux positions 1,2 et 3 des TAGs. Le mélange lipidique de départ est enrichi en acide palmitique, par exemple avec de la stéarine de palme de manière à avoir environ 40 % de P en position 2 des TAGs. L'interestérification non-régiospécifique peut avoir lieu par voie enzymatique, catalysée par une lipase non-régiospécifique, ou, de préférence par voie chimique, catalysée par un catalyseur chimique. Par cette réaction, la distribution non-aléatoire des acides gras existant dans les lipides naturels entre les différentes positions des TAGs est transformée en une distribution aléatoire, c'est à dire que les acides gras se réarrangent d'une manière égale aux 3 positions. Dans cette première étape, le contenu en P en position 2 passe à environ 42 %, ce qui correspond pratiquement à la totalité de P présent. dans le lait humain. Si l'on tient compte de celui qui est en positions 1 et 3, il y a donc un excès de P par rapport au lait humain.

Les acides gras PUFA, et particulièrement les LC-PUFA subissent la réaction de réarrangement sous forme de TAGs, plus stables que les mélanges d'acides gras libres et avec une durée de réaction limitée, à relativement basse température et sous atmosphère inerte, par exemple sous azote. Par contre, selon l'état de la technique, il faut d'abord préparer les mélanges d'acides gras destinés à servir de substrat de la lipolyse, ce qui peut également entraîner en partie leur dégradation par oxydation.

Le mélange lipidique qui résulte de la réaction a une stabilité oxydative améliorée de manière significative par rapport à celle d'un simple mélange physique de lipides de même composition en acides gras PUFA. Ceci résulte probablement de la distribution des acides gras PUFA entre les différentes positions des TAGs.

La composition lipidique selon l'invention est caractérisée par le fait qu'elle a une stabilité oxidative OSI correspondant à un index au moins supérieur de 1,5 fois à celui d'un mélange physique de triglycérides de même composition à 80 °C et avec un débit d'air de 150 ml/min.

Le but de l'étape 2) est de remplacer sélectivement le P en positions 1 et 3 par d'autres acides gras, notamment par les MCFA et l'acide oléique (O), mais pas par les PUFA. Pour ce faire, on tire parti de la résolution cinétique, c'est à dire du fait que la plupart des lipases 1,3 régiospécifiques, génétiquement modifiées ou non, par exemple de Mucor miehei, de Candida cylindracea et la lipase pancréatique, réagissent de manière préférentielle par exemple vis-à-vis des MCFA, de P, de O et de manière discriminatoire vis-à-vis des LC-PUFAs à 4, 5 et 6 doubles liaisons, par exemple de DHA et AA. De cette façon, l'excès de P est échangé rapidement, ce qui laisse les PUFAs, en particulier le DHA pratiquement intact en positions 1 et 3.

On constate qu'après la séparation ultérieure des acides gras libres, la stabilité oxydative des TAGs du mélange issu de l'étape 2 est maintenue ou même améliorée.

Après la seconde étape du procédé selon l'invention, il est nécessaire d'éliminer les acides gras libres en excès ainsi que ceux formés au cours du processus d'échange, lesquels peuvent être sujets à l'oxydation. Pour ce faire on peut utiliser toute méthode connue comme, par exemple la neutralisation classique ou l'entraînement à la vapeur sous vide.

On réalise de préférence cette troisième étape en effectuant une neutralisation contrôlée des acides gras libres et donc un raffinage sélectif minimisant l'hydrolyse et la saponification. Le principe de ce raffinage sélectif est d'opérer en phase hydro-alcoolique sous agitation modérée, ce qui conduit à un partage des acides gras libres entre la phase lipidique et la phase hydro-alcoolique non miscible à la phase lipidique, cependant que l'on ajoute graduellement une base, par exemple une solution aqueuse concentrée de NaOH ou KOH dans la phase hydro-alcoolique, par exemple au moyen d'un pH-stat réglé à une valeur de consigne, par exemple environ 9,5. Il se forme des savons qui sont solubilisés au fur et à mesure dans la phase hydro-alcoolique, ce qui produit un déplacement de l'équilibre et une désacidification progressive de la phase lipidique. Le pH choisi minimise la neutralisation des dérivés phénoliques. La température de la réaction choisie est supérieure à la température de fusion des lipides et inférieure à la température d'ébullition du mélange hydro-alcoolique. Quand tous les acides gras on été extraits, le pH se stabilise, ce qui indique la fin de la réaction. Après la neutralisation, on sépare les deux phases par décantation et on recueille la phase lipidique désacidifiée, dont on élimine l'éthanol, par exemple par évaporation sous vide et les savons résiduels, par exemple par lavage avec une solution hydro-éthanolique ou par traitement avec un adsorbant, notamment un silicagel amorphe.

L'invention concerne également un aliment infantile contenant des protéines, le cas échéant hydrolysées, des hydrates de carbone, des lipides et le cas échéant des vitamines et des oligo-éléments, caractérisé par le fait qu'il contient, en poids des matières sèches, 15 à 35 % de lipides dont 50 à 100 % sont constitués de la composition lipidique précédente.

Un tel aliment infantile peut être préparé sous forme liquide ou de poudre avec incorporation de la composition lipidique précédente, par mélange humide des différents constituents, puis stérilisation ou pasteurisation et conditionnement aseptique dans le cas d'un produit liquide ou par séchage, par exemple par pulvérisation ou encore par mélange à sec dans le cas d'une poudre.

Les exemples ci-après illustrent l'invention. Dans ceux-ci, les parties et pourcentages sont en poids, sauf indication contraire.

### Exemple 1

### 1.1) Interestérification chimique

On part d'un mélange de lipides dont la nature et la composition sont indiquées au tableau 1 ci-après:

**Tableau 1**

| **Huile/graisse** | **Mélange (%)** | **Origine** | **caractéristiques** |
|---|---|---|---|
| Huile de poisson | 2 | Nippon Suisan Kaisha | Riche en DHA |
| Huile source d'AA | 1 | Gist-Brocades | AA, 37 % (huile d'organisme unicellulaire) |
| Huile de soja | 10 | Du commerce | Source de ALA |
| Stéarine de palme | 5 | Loders Croklaan | P, 75 % |
| Huile de palme | 82 | Morgia | Source de P |

On interestérifie de manière aléatoire le mélange lipidique précédent contenant 24 g d'huile de poisson (à 24,6 % de DHA et 6,4 % d'EPA), 12 g d'huile source d'AA (contenant 37% d'AA), 60 g de stéarine de palme (à 75 % de P), 984 g d'huile de palme et 120 g d'huile de soja (contenant LA et ALA) en présence de 0,5 % de méthylate de sodium à titre de catalyseur à 50° C sous agitation continuelle sous atmosphère d'azote pendant 4 h. On lave ensuite le mélange réactionnel avec 2 1 d'eau chaude pour en éliminer les savons, puis on le sèche à 50° C sous un vide de 20 mbar.

Pour éviter l'oxydation, on peut y ajouter une petite quantité de sel de sodium de l'acide éthylènediaminetétra-acétique (EDTA-Na₃).

### 1.2) Acidolyse enzymatique 1,3 régiospécifique

L'acidolyse est un réarrangement catalysé par une lipase 1,3 régiospécifique d'un mélange constitué du produit de l'étape 1 précédente et d'un mélange d'acides gras dont la composition est indiquée au tableau 2 ci-après:

**Tableau 2**

| **Acide gras** | **%** |
|---|---|
| C8:0 | 10 |
| C10:0 | 15 |
| C12:0 | 10 |
| C14:0 | 1,6 |
| C16:0 | 3 |
| C16:1 | 3,2 |
| C18:0 | 1,7 |
| C18:1 | 45 |
| C18:2 | 6,3 |
| C18:3 (alpha) | 0,3 |
| Autres | 3,9 |

On soumet 940 g du produit de l'étape 1 précédente et 940 g du mélange d'acide oléique du commerce et des acides C₈₋₁₂:0 de composition indiquée dans le tableau 2 précédent à une interestérification catalysée par une lipase immobilisée 1,3 régiospécifique (Lipozyme IM 60 ®, Novo) à raison de 10 % de lipase par rapport aux substrats. La teneur en eau de la lipase est ajustée en ajoutant 6 % d'eau et en la laissant au repos pendant 10 h avant de l'utiliser. On effectue ensuite la réaction à 40° C sous atmosphère d'azote pendant 5 h. Après réaction, on sépare la lipase par filtration et on recueille un mélange brut contenant des TAGs et des acides gras libres.

### 1.3) Neutralisation contrôlée pour éliminer les acides gras libres

On introduit dans un réacteur 1,4 kg du mélange brut de l'étape précédente et 3,5 1 d'éthanol à 90 %, que l'on agite modérément à 40° C sous atmosphère d'azote. On y ajoute continuellement 670 g d'une solution aqueuse à 25 % de KOH tout en maintenant le pH du milieu réactionnel entre 8,5 et 9,5 au moyen d'un pH-stat réglé à la valeur de consigne 9,5. Il se forme des savons qui sont solubilisés au fur et à mesure dans la phase hydro-alcoolique, non-miscible à la phase lipidique, ce qui produit un déplacement de l'équilibre de partage des acides gras entre la phase lipidique et la phase hydro-alcoolique vers la phase hydro-alcoolique, et par suite une désacidification progressive de la phase lipidique. Le pH se stabilise, ce qui indique que tous les acides gras ont été extraits. On arrête alors l'agitation, la phase hydro-alcoolique, plus légère se sépare de la phase lipidique et on recueille la phase lipidique.

On détermine la composition des acides gras du produit obtenu par chromatographie gaz-liquide des esters méthyliques des acides après méthylation des triglycérides (FAMES).

Pour déterminer la distribution des acides gras entre la position 2 et les positions 1,3 des TAGs, on effectue une lipolyse par la lipase pancréatique (IUPAC 2.210).

Les résultats de l'analyse des principaux acides gras et de leur répartition dans le mélange obtenu sont indiqués dans le tableau 3 ci-après:

**Tableau 3**

| **Acide gras (fames)** | **Acides gras en % du total (fames)** | **Acides gras en position 2 des TAGs (%, analysé)** | **Acides gras en positions 1,3 des TAGs (%, calculé)** |
|---|---|---|---|
| C8:0 | 3,07 | 0,06 | 4,56 |
| C10:0 | 5,08 | 0,21 | 7,48 |
| C12:0 | 4,04 | 0,39 | 5,83 |
| C14:0 | 1,2 | 1,03 | 1,28 |
| C16:0 | 28,13 | 40,86 | 21,88 |
| C18:0 | 3,33 | 4,62 | 2,7 |
| C18:1 | 37,83 | 34,1 | 39,66 |
| C18:2 | 10,93 | 12,57 | 10,12 |
| C18:3, n-3 (alpha) | 0,56 | 0,6 | 0,54 |
| C20:4, n-6 (AA) | 0,26 | 0,34 | 0,22 |
| C20:5, n-3 (EPA) | 0,18 | 0,2 | 0,17 |
| C22:6, n-3 (DHA) | 0,42 | 0,35 | 0,46 |
| Autres | 4,97 | 4,67 | 5,1 |

On constate que la composition des acides gras ainsi que leur distribution sur les TAGs est très proche de celles du lait humain.

De plus, la stabilité oxydative (OSI) du produit obtenu, mesurée dans le test d'oxydation accélérée avec l'appareil Omnion (R), USA, comme période d'induction à 80° C avec un débit d'air de 150 ml/min., correspond à un index d'environ 160 h, c'est à dire environ 1,5-2 fois supérieur à celui de 100 h mesuré pour le mélange de lipides de départ.

La teneur en solides de la graisse déterminée par résonnance magnétique nucléaire pulsée (NMR, IUPAC 2.150 6.2.2.2) est la suivante:

Teneur en solides (%) à la température (° C) indiquée

| | |
|---|---|
| N-5 | 40,3 |
| N-10 | 29,9 |
| N-15 | 19 |
| N-20 | 10,4 |
| N-30 | 1,2 |
| N-35 | 0 |

Le résultat précédent montre qu'il n'y a pas de quantité significative de TAGs trisaturés indésirés.

### Exemple 2

On procède comme à l'exemple 1, étape 1), excepté que la composition du mélange lipidique de départ est celle indiquée au tableau 4 ci-après:

**Tableau 4**

| **Huile/graisse** | **Mélange (%)** | **Origine** | **Caractéristiques** |
|---|---|---|---|
| Huile de poisson | 2 | Nippon Suisan Kaisha | Riche en DHA |
| Huile source d'AA | 1,5 | Gist-Brocades | AA, 37 % (huile d'organisme unicellulaire) |
| Huile de soja | 15 | Du commerce | Source de ALA |
| Huile de palme | 81,5 | Morgia | Source de P |

On effectue ensuite l'interestérification enzymatique comme à l'exemple 1, étape 2), excepté que la composition du mélange des acides gras libres est telle que définie au tableau 5 ci-après et que le rapport TAGs/mélange d'acides gras est 70:30.

**Tableau 5**

| **Acide gras** | **%** |
|---|---|
| C10:0 | 12 |
| C12:0 | 15 |
| C14:0 | 6,7 |
| C16:0 | 3,2 |
| C16:1 | 3,5 |
| C18:0 | 1,8 |
| C18:1 | 48,6 |
| C18:2 | 6,7 |
| C18:3 (alpha) | 0,3 |
| Autres | 2,2 |

Les résultats de l'analyse des principaux acides gras et de leur répartition dans le mélange obtenu sont indiqués dans le tableau 6 ci-après:

**Tableau 6**

| **Acide gras (fames)** | **Acides gras en % du total (fames)** |
|---|---|
| C10:0 | 2,89 |
| C12:0 | 4,04 |
| C14:0 | 2,32 |
| C16:0 | 28,84 |
| C18:0 | 4,62 |
| C18:1 | 38,65 |
| C18:2 | 13,23 |
| C18:3, n-3 (alpha) | 0,94 |
| C20:4, n-6 (AA) | 0,48 |
| C20:5, n-3 (EPA) | 0,21 |
| C22:6, n-3 (DHA) | 0,36 |
| Autres | 3,42 |

On constate que la composition des acides gras ainsi que leur distribution sur les TAGs est très proche de celles de la graisse de lait humain.

## Revendications

1. Composition lipidique synthétique dont le contenu et la distribution des acides gras sont proches de ceux de la graisse de lait humain, **caractérisée par le fait:**
- **qu'**elle contient moins de 2 % en poids d'acides gras libres,
- **que** les acides gras des triacylglycérols, comprennent en poids:
- 35 à 55 % d'acides gras saturés, parmi lesquels 18 à 36 % d'acide palmitique, 2 à 40 % d'acides caprylique et caprique, au plus 10 % d'acide laurique et au plus 10 % d'acide myristique,
- 30 à 45 % d'acides gras monoinsaturés,
- 9 à 22 % d'acides gras polyinsaturés, parmi lesquels moins de 2 % d'acides gras polyinsaturés à longue chaîne n-6 comprenant l'acide arachidonique et moins de 1% d'acides gras polyinsaturés à longue chaîne n-3 comprenant l'acide docosahexaénoique et que le rapport des acides gras n-6:n-3 est 5:1 à 15:1,
- **que** l'acide palmitique est en prédominance en position 2 des triacylglycérols et que les acides arachidonique et docosahexaénoique sont répartis entre les positions 1, 2 et 3 des triacylglycérols.

2. Composition lipidique selon la revendication 1, **caractérisée par le fait que** les acides gras des triacylglycérols contiennent 2 à 10 % en poids d'acides caprylique et caprique.

3. Composition lipidique selon la revendication 1, **caractérisée par le fait qu'**elle a une stabilité oxydative OSI correpondant à un index au moins supérieur de 1,5 fois à celui d'un mélange physique de triglycérides de même composition à 80° C et avec un débit d'air de 150 ml/min.

4. Procédé de préparation d'une composition lipidique selon l'une des revendications 1 à 3, **caractérisé par** les étapes successives suivantes:
1) On interestérifie de manière non-régiospécifique un mélange de lipides contenant une huile de palme enrichie en acide palmitique, une huile végétale riche en les acides gras insaturés linoléique et alpha-linolénique, une huile source d'acide arachidonique, une huile source d'acide docosahexaénoique, dans des proportions définies pour obtenir la composition en acides gras requise avec une distribution aléatoire des résidus d'acides gras entre les positions 1, 2 et 3 du triacylglycérol,
2) On interestérifie le mélange de l'étape 1) avec un mélange d'acides gras libres comprenant en prédominance les acides gras à chaîne moyenne et l'acide oléique, au moyen d'une lipase 1,3 régiospécifique et
3) On élimine les acides gras libres du produit de la réaction de l'étape 2).

5. Procédé selon la revendication 4, **caractérisé par le fait que** l'interestérification de l'étape 1) a lieu par voie chimique avec une quantité efficace de catalyseur, notamment de méthylate de sodium à une température inférieure à 80° C pendant au plus 10 h sous atmosphère inerte.

6. Procédé selon la revendication 4, **caractérisé par le fait que**, dans l'étape 3), l'on élimine les acides gras libres en excès ainsi que ceux formés au cours du processus d'échange par neutralisation ou entraînement à la vapeur sous vide.

7. Procédé selon la revendication 4, **caractérisé par le fait que**, dans l'étape 3), l'on élimine les acides gras libres en excès ainsi que ceux formés au cours du processus d'échange par neutralisation contrôlée des acides gras libres à une température supérieure à la température de fusion des lipides et inférieure à la température d'ébullition du mélange hydro-alcoolique, en minimisant l'hydrolyse et la saponification, que l'on opère en phase hydro-alcoolique sous agitation modérée, ce qui conduit à un partage des acides gras libres entre la phase lipidique et la phase hydro-alcoolique non miscible à la phase lipidique, cependant que l'on ajoute graduellement une base dans la phase hydro-alcoolique, notamment au moyen d'un pH-stat réglé à une valeur de consigne allant de 8,5 à 9,5, qu'il se forme des savons qui sont solubilisés au fur et à mesure dans la phase hydro-alcoolique, ce qui produit un déplacement de l'équilibre et une désacidification progressive de la phase lipidique et ceci jusqu'à ce que le pH se stabilise quand tous les acides gras on été extraits, et qu' après la neutralisation, on sépare les deux phases par décantation et on recueille la phase lipidique désacidifiée, dont on élimine l'alcool, notamment par exemple par évaporation sous vide et les savons résiduels, notamment par lavage avec une solution hydro-éthanolique ou par traitement avec un adsorbant, notamment un silicagel amorphe.

8. Aliment infantile, contenant des protéines, le cas échéant hydrolysées, des hydrates de carbone, des lipides et le cas échéant des vitamines et des oligo-éléments, **caractérisé par le fait qu'**il contient, en poids des matières sèches, 15 à 35 % de lipides dont 50 à 100 % sont constitués d'une composition lipidique selon l'une des revendications 1 à 3.

9. Procédé de préparation d'un aliment infantile selon la revendication 8, sous forme liquide par mélange humide des différents constituants, puis stérilisation ou pasteurisation et conditionnement aseptique, **caractérisé par le fait que** l'on y incorpore une composition lipidique selon l'une des revendications 1 à 3.

10. Procédé de préparation d'un aliment infantile selon la revendication 8, sous forme de poudre par séchage d'un mélange liquide des différents constituants, par exemple par pulvérisation ou encore par mélange à sec des différents constituants, **caractérisé par le fait que** l'on y incorpore une composition lipidique selon l'une des revendications 1 à 3.

## Claims

1. Synthetic lipid composition of which the content and distribution of fatty acids are close to those of the fats of human milk, **characterized in that**:
- it contains less than 2 wt.% of free fatty acids,
- that the fatty acids of the triacylglycerols comprise by weight:
- 35 to 55% of saturated fatty acids, including 18 to 36% palmitic acid, 2 to 40% caprylic and capric acids, at most 10% lauric acid and at most 10% myristic acid,
- 30 to 45% mono-unsaturated fatty acids,
- 9 to 22% polyunsaturated fatty acids, including less than 2% n-6 long chain polyunsaturated fatty acids, including arachidonic acid and less than 1% n-3 long chain polyunsaturated fatty acids, including docosahexaenoic acid, and that the ratio of n-6:n-3 fatty acids is 5:1 to 15:1,
- that palmitic acid is predominantly in the 2 position of the triacylglycerols and that the arachidonic and docosahexaenoic acids are distributed between the 1, 2 and 3 positions of the triacylglycerols.

2. Lipid composition according to claim 1, **characterized in that** the fatty acids of the triacylglycerols contain 2 to 10 wt.% of caprylic and capric acids.

3. Lipid composition according to claim 1, **characterized in that** it has an oxidative stability OSI corresponding to an index at least greater than 1.5 times that of a physical mixture of triglycerides of the same composition at 80°C and with an air flow rate of 150 ml/min.

4. Lipid composition according to any one of claims 1 to 3, **characterized by** the following successive steps:
1) There is interesterified in a non-regiospecific manner, a mixture of lipids containing palm oil enriched in palmitic acid, a vegetable oil rich in linoleic and alphalinolenic unsaturated fatty acids, an oil that is the source of arachidonic acid, and an oil that is the source of docosahexaenoic acid, in definite proportions so as to obtain the required composition in fatty acids with a random distribution of fatty acid residues between the 1, 2 and 3 positions of triacylglycerol,
2) The mixture of step 1) is interesterified with a mixture of free fatty acids including preponderantly medium chain fatty acids and oleic acid, by means of a 1,3 regiospecific lipase and
3) The free fatty acids are removed from the product of the reaction of step 2).

5. Method according to claim 4 **characterized in that** the interestification of step 1) takes place by a chemical method with an effective quantity of catalyst, in particular sodium methylate, at a temperature below 80°C for at most 10 h under an inert atmosphere.

6. Method according to claim 4, **characterized in that**, in step 3), the excess free fatty acids are removed as well as those formed during the exchange process, by neutralization or by entrainment with steam under vacuum.

7. Method according to claim 4, **characterized in that** in step 3), the excess free fatty acids are removed as well as those formed during the exchange process by controlled neutralization of the free fatty acids at a temperature above the melting point of the lipids and below the boiling point of the hydro-alcoholic mixture, while minimizing hydrolysis and saponification, that the operation takes place in a hydro-alcoholic phase with moderate stirring, which leads to a partition of the free fatty acids between the lipid phase and the hydro-alcoholic phase that is immiscible with the lipid phase, while a base is added gradually to the hydro-alcoholic phase, in particular by means of a pH-stat adjusted to a set value from 8.5 to 9.5, that it forms soaps that are solubilized progressively in the hydro-alcoholic phase, which produces a displacement of the equilibrium and a progressive de-acidification of the lipid phase and this until the pH is stabilized when all the fatty acids have been extracted, and that after neutralization, the two phases are separated by decanting and the de-acidified lipid phase is collected, from which the alcohol is removed, in particular for example by evaporation under vacuum and from which the the residual soaps are removed in particular by washing with a hydro-ethanolic solution or by treatment with an adsorbent, in particular an amorphous silica gel.

8. Food for infants, containing proteins, optionally hydrolysed, carbohydrates, lipids and optionally vitamins and trace elements, **characterized in that** it contains, by weight of dry matter, 15 to 35% lipids of which 50 to 100% consist of a lipid composition according to one of claims 1 to 3.

9. Method for preparing a food for infants according to claim 8, in a liquid form by mixing the different constituents wet, followed by sterilization or pasteurization and aseptic packaging, **characterized in that** a lipid composition according to one of claims 1 to 3 is added thereto.

10. Method for preparing a food for infants according to claim 8, in the form of a powder by drying a liquid mixture of the different constituents; for example by spraying or furthermore by dry mixing the different constituents, **characterized in that** a lipid composition according to one of claims 1 to 3 is incorporated therein.

## Patentansprüche

1. Synthetische Lipidzusammensetzung, bei der der Gehalt an Fettsäuren und ihre Verteilung nahe bei denen des Fetts der menschlichen Milch liegen, **dadurch gekennzeichnet,**
- **daß** sie weniger als 2 Gew.-% freie Fettsäuren enthält,
- **daß** die Fettsäuren der Triacylglycerine in Gew.-% umfassen:
- 35 bis 55% gesättigte Fettsäuren, davon 18 bis 36% Palmitinsäure, 2 bis 40% Capryl- und Caprinsäure, höchstens 10% Laurinsäure und höchstens 10% Myristinsäure,
- 30 bis 45% einfach ungesättigte Fettsäuren,
- 9 bis 22% langkettige mehrfach ungesättigte Fettsäuren, darunter weniger als 3% mehrfach ungesättigte n-6-Fettsäuren, die Arachidonsäure umfassen, und weniger als 1% langkettige mehrfach ungesättigte n-3-Fettsäuren, die Docosahexaensäure umfassen, und daß das Verhältnis der Fettsäuren n-6:n-3 5:1 bis 15:1 beträgt,
- **daß** die Palmitinsäure in 2-Position der Triacylglycerine vorherrschend ist und daß die Arachidonsäure und die Docosahexaensäure auf die Positionen 1, 2 und 3 der Triacylglycerine aufgeteilt sind.

2. Lipidzusammensetzung nach Anspruch 1, **dadurch gekennzeichnet, daß** die Fettsäuren der Triacylglycerine 2 bis 10 Gew.-% Capryl- und Caprinsäuren enthalten.

3. Lipidzusammensetzung nach Anspruch 1, **dadurch gekennzeichnet, daß** sie eine oxidative Stabilität OSI besitzt, die einem Index entspricht, der mindestens 1,5mal größer als der Index einer physikalischen Triglyceridmischung derselben Zusammensetzung bei 80°C und mit einem Luftdurchsatz von 150 ml/min ist.

4. Verfahren zur Herstellung einer Lipidzusammensetzung nach einem der Ansprüche 1 bis 3, **gekennzeichnet durch** die folgenden aufeinanderfolgenden Schritte:
1) man estert nicht-regiospezifisch eine Lipidmischung um, die ein bezüglich Palmitinsäure angereichertes Palmöl, ein Pflanzenöl, das reich an den ungesättigten Fettsäuren Linolsäure und alpha-Linolensäure ist, ein Öl als Arachidonsäurequelle, ein Öl als Docosahexaensäureqelle in Anteilen enthält, die so bestimmt sind, daß man die gewünschte Pettsäurenzusammensetzung mit einer zufälligen Aufteilung der Pettsäurereste auf die Positionen 1, 2 und 3 des Triacylglycerins exhält,
2) man estert die Mischung von Schritt 1) mit Hilfe einer 1,3-regiospezifischen Lipase mit einer Mischung von freien Fettsäuren um, die vorherrschend die mittelkettigen Fettsäuren und Ölsäure enthält, und
3) entfernt die freien Fettsäuren aus dem Produkt der Reaktion des Schritte 2).

5. Verfahren nach Anspruch 4, **dadurch gekennzeichnet, daß** die Umesterung von Schritt 1) auf chemischem Weg mit einer wirksamen Katalysatormenge, insbesondere Natriummethylat, bei einer Temperatur unter 80°C während höchstens 10 h unter Schutzgasatmosphäre stattfindet.

6. verfahren nach Anspruch 4, **dadurch gekennzeichnet, daß** man im Schritt 3) die überschüssigen sowie die während des Austausches gebildeten freien Fettsäuren durch Neutralisierung oder durch Dampfdestillation unter Unterdruck entfernt.

7. Verfahren nach Anspruch 4, **dadurch gekennzeichnet, daß** man in Schritt 3) die überschüssigen sowie die während des Austauschprozesses gebildeten freien Fettsäuren durch gesteuerte Neutralisierung der freien Fettsäuren bei einer Temperatur oberhalb der Schmelztemperatur der Lipide und unterhalb der Siedetemperatur der wässrig-alkoholischen Mischung entfernt. wobei man die Hydrolyse und die Verseifung minimiert, und man in wässrig-alkoholischer Phase unter mäßigem Rühren arbeitet, was zu einer Aufteilung der freien Fettsäuren auf die Lipidphase und auf die mit der Lipidphase nicht mischbare wässrigalkcholische Phase führt, während man der wässrig-alkoholischen Phase allmählich eine Base insbesondere mit Hilfe eines pH-Stats zusetzt, der auf einen Sollwert von 8,5 bis 9,5 eingestellt ist, so daß sich Seifen bilden, die in der wässrigalkoholischen Phase allmählich solubilisiert werden, was eine Verschiebung des Gleichgewichts und eine allmähliche Entsäuerung der Lipidphase bewirkt, und zwar bie der pH-Wert sich stabilisiert, wenn alle Fettsäuren extrahiert wurden, und daß man nach Neutralisierung die beiden Phasen durch Dekantieren trennt und die entsäuerte Lipidphase gewinnt, aus der man den Alkohol insbesondere beispielsweise durch Abdampfen unter Unterdruck und die Restseifen insbesondere durch Waschen mit einer wässrig-ethanolischen Lösung oder durch Behandlung mit einem Adsorptionsmittel, insbesondere einem amorphen silikagel, entfernt.

8. Kindernahrung, die Proteine, die ggf. hydrolysiert wurden, Kohlenhydrate, Lipide und ggf. Vitamine und Spurenelemente enthält, **dadurch gekennzeichnet, daß** sie in Gewicht der Trockenmasse 15 bis 35% Lipids enthält, wovon 50 bis 100% aus einer Lipidzusammensetzung nach einem der Ansprüche 1 bis 3 bestehen.

9. Verfahren zur Herstellung einer Rindernahrung nach Anspruch 8 in flüssiger Form durch Naßmischen der einzelnen Bestandteile, Sterilisieren oder Pasteurisieren und keimfreies Verpakken, **dadurch gekennzeichnet, daß** man in sie eine Lipidzusammensetzung nach einem der Ansprüche 1 bis 3 einarbeitet.

10. Verfahren zur Herstellung einer Kindernahrung nach Anspruch a in Pulverform durch Trocknen einer flüssigen Mischung aus den einzelnen Bestandteilen beispielsweise durch Sprühtrocknung oder durch trockenes Mischen der Bestandteile, **dadurch gekennzeichnet, daß** man in sie eine Lipidzusammensetzung nach einem der Ansprüche 1 bis 3 einarbeitet.
